# EUROPEAN PATENT APPLICATION

(11) **EP 4 538 134 A1**
(43) Date of publication of application: **16.04.2025**
(21) Application number: 23831317.5
(22) Date of filing: 23.06.2023
(51) Int. Cl.: B60W 50/10, B60W 30/10, B60W 40/02, B60W 50/12, B60W 60/00

(54) **MOBILE BODY, CONTROL METHOD, AND PROGRAM**

(30) Priority: 29.06.2022 JP 2022104885
(71) Applicant: HONDA MOTOR CO., LTD., Minato-ku Tokyo 107-8556 (JP)
(72) Inventor: AIZAWA Koki, Wako-shi, Saitama 351-0193 (JP); WAKAYAMA Ryoji, Wako-shi, Saitama 351-0193 (JP); SHIRAKATA Kento, Wako-shi, Saitama 351-0193 (JP); MATSUNAGA Hideki, Wako-shi, Saitama 351-0193 (JP)
(74) Representative: Kiwit, Benedikt
(86) International application number: PCT/JP2023/023390
(87) International publication number: WO 2024/004875

(57) **Abstract**

A moving body capable of carrying an occupant includes a drive device for moving the moving body, a control device for controlling the drive device, a detection device for acquiring a situation on at least a moving direction side of the moving body, a first operator that is provided on an armrest of the moving body, in which the control device automatically generates a target trajectory for the moving body to change the moving direction on the basis of the acquired situation on the moving direction side in response to an operation performed on the first operator to instruct either a left or right direction, and controls the drive device so that the moving body moves along the target trajectory.

## Description

### TECHNICAL FIELD

The present invention relates to a moving body, a control method, and a program.

### BACKGROUND ART

In recent years, there has been increased effort to provide an access to sustainable transport systems that take into consideration vulnerable transport participants. To realize this, research and development to further improve the safety and convenience of traffic through research and development related to driving support technology has been mainly focused on. For example, autonomous driving and advanced driving assistance based on a result of sensing a moving direction of a moving body have been put into practical use. These technologies can include a form in which the moving direction of the moving body is controlled by a control device of the moving body, and a form in which at least a rough moving direction is determined by receiving some kinds of operation from an occupant. In recent years, one-seater or two-seater moving bodies known as micro-mobiles have also been put into practical use (Patent Document 1).

### Citation List

### Patent Document

Patent Document 1: Japanese Unexamined Patent Application, First Publication

### SUMMARY OF INVENTION

### Technical Problem

However, in the conventional technology, when a moving direction of a moving body is changed, traveling of the moving body cannot be suitably changed in some cases.

The present invention has been made in consideration of the circumstances described above, and one of the objects is to provide a moving body, a control method, and a program that can suitably control the traveling of the moving body when the moving direction of the moving body is changed. This will ultimately contribute to a development of a sustainable transportation system.

### Solution to Problem

A moving body according to the present invention has adopted the following configuration.
(1): A moving body according to one aspect of the present invention is a moving body capable of carrying an occupant, and includes a drive device for moving the moving body, a control device configured to cause the moving body to travel in a mode in which acceleration or deceleration and steering are automatically performed, a first operator that is provided on an armrest of the moving body, and a direction indicator configured to indicate either turning right or left of the moving body, in which the control device controls the drive device to decelerate the moving body in response to an operation performed on the first operator to instruct either the left or right direction, and controls the direction indicator to cause the direction indicator indicating the instructed direction to flicker.
(2): **In** the aspect of (1) described above, the moving body further includes a detection device for acquiring a situation on at least a moving direction side of the moving body, in which, when an operation is performed to instruct the first operator to move either left or right, the control device generates a target trajectory for causing the moving body to travel in either the instructed left or right direction on the basis of the acquired situation on the moving direction side, controls the drive device to decelerate the moving body, and controls the direction indicator to cause the direction indicator indicating the instructed direction to flicker.
(3): **In** the aspect of (1) or (2) described above, the moving body further includes a detection device for acquiring a situation at least on a moving direction side of the moving body, in which the detection device detects a traveling path candidate along which the moving body travels in either the instructed left or right direction, and the control device performs control so as not to execute the deceleration and the flickering when a distance between the moving body and the traveling path candidate in a longitudinal direction of a traveling path along which the moving body is present is within a first threshold value.
(4): In the aspect of (2) described above, the detection device detects a traveling path candidate along which the moving body in either the instructed left or right direction will travel, and the control device refers to a speed of the moving body and a target speed obtained from the target trajectory, and performs control so as not to execute the deceleration and flickering when a degree of the deceleration required for the moving body to enter the traveling path candidate on the target trajectory is equal to or greater than a second threshold value.
(5): In the aspect of (1) or (2) described above, the moving body further includes a detection device for acquiring a situation at least on the moving direction side of the moving body, in which the detection device detects a traveling path candidate along which the moving body in either the instructed left or right direction will travel, and the control device controls the direction indicator to delay flickering of the direction indicator when a distance between the moving body and the traveling path candidate in a longitudinal direction of the traveling path on which the moving body is present is equal to or greater than a third threshold value, or when another traveling path is present between the moving body and the traveling path candidate.
(6): In the aspect of (2) described above, the moving body further includes a detection device for acquiring a situation at least on the moving direction side of the moving body, in which the detection device detects a traveling path candidate along which the moving body in either the instructed left or right direction will travel, and the control device maintains the target trajectory even if the moving body stops due to an intervention of the occupant before the moving body completes entering the traveling path candidate.
(7): In the aspect of (2) described above, when the control device fails to identify a traveling path corresponding to the target trajectory during flickering of the direction indicator, the control device identifies the traveling path on the basis of past information of the traveling path corresponding to the target trajectory.
(8): A control method according to another aspect of the present invention is a control method executed by the control device of a moving body which includes a drive device for moving the moving body capable of carrying an occupant, a control device configured to cause the moving body to travel in a mode in which acceleration or deceleration and steering are automatically performed, a first operator that is provided on an armrest of the moving body, and a direction indicator configured to indicate either turning right or left of the moving body, and includes controlling the drive device to decelerate the moving body in response to an operation performed on the first operator to instruct either a left or right direction, and controlling the direction indicator indicating the instructed direction to cause the direction indicator to flicker.
(9): A program according to still another aspect of the present invention is a program executed by a control device of a moving body that includes a drive device for moving the moving body capable of carrying an occupant, a control device configured to cause the moving body to travel in a mode in which acceleration or deceleration and steering are automatically performed, a first operator that is provided on an armrest of the moving body, and a direction indicator configured to indicate either turning right or left of the moving body, and includes controlling the drive device to decelerate the moving body in response to an operation performed on the first operator to instruct either a left or right direction, and controlling the direction indicator indicating the instructed direction to cause the direction indicator to flicker.

### Advantageous Effects of Invention

According to aspects (1) to (9), when a moving direction of a moving body is changed, traveling of the moving body can be suitably controlled.

### BRIEF DESCRIPTION OF DRAWINGS

[FIG. 1] A diagram which shows an example of a configuration of a moving body 1.
[FIG. 2] A perspective view of the moving body 1 according to a first embodiment, seen from above.
[FIG. 3] A diagram which shows a state in which a right door D_r is open, seen from an inside of the moving body 1.
[FIG. 4] A diagram which shows an example of an image IM captured by an external camera of an external environment detection device 10.
[FIG. 5] A diagram which exemplifies a target trajectory K before and after a first operator OP1 is operated.
[FIG. 6] A diagram which shows an example of a situation in which the flickering control of the direction indicator 50 is delayed.
[FIG. 7] A diagram for describing the identification of the traveling path after turning right or left by the target trajectory generation unit 130
[FIG. 8] A diagram which shows an example of the flow of the processing executed by the control device 100.
[FIG. 9] A diagram which shows an example of a flow of processing executed by the control device 100.
[FIG. 10] A perspective view of a moving body 1A of the second embodiment, seen from above.

### DESCRIPTION OF EMBODIMENTS

A moving body, a control method, and a program of the present invention will be described below with reference to the drawings. The moving body is a vehicle on which an occupant can ride, and may be called micromobility. The moving body may be capable of traveling not only on roadways but also on sidewalks. In this case, different speed limit controls are implemented for a roadway and a sidewalk, and when the moving body is traveling on a sidewalk, this may be notified to the outside by some means. However, this specification will omit description of this, and will focus solely on a case where the moving body moves on a roadway.

### <First embodiment>

### [Configuration]

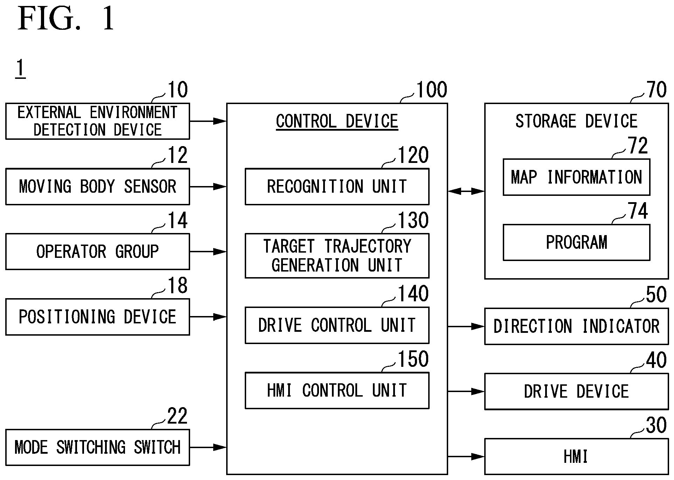

FIG. 1 is a diagram which shows an example of a configuration of a moving body 1. The moving body 1 is equipped with, for example, an external environment detection device 10, a moving body sensor 12, an operator group 14, a positioning device 18, a mode switching switch 22, an HMI 30, a drive device 40, a direction indicator 50, a storage device 70, and a control device 100. Note that some of these components that are not essential for realizing functions of the present invention may be omitted.

The external environment detection device 10 is each of various devices for acquiring a situation at least on a moving direction side of the moving body 1. The external environment detection device 10 is an example of a detection device. The external environment detection device 10 includes, for example, an external camera. The external environment detection device 10 may also include a radar device, a light detection and ranging (LIDAR), a sensor fusion device, and the like. The external environment detection device 10 outputs information indicating a result of the detection (an image, an object position, or the like) to the control device 100.

The moving body sensor 12 includes, for example, a speed sensor, an acceleration sensor, a yaw rate (angular speed) sensor, a direction sensor, and an operation amount detection sensor attached to various operators included in the operator group 14.

The positioning device 18 is a device that positions a position of the moving body 1. The positioning device 18 is, for example, a global navigation satellite system (GNSS) receiver, and identifies the position of the moving body 1 on the basis of a signal received from a GNSS satellite and outputs it as position information. Note that position information of the moving body 1 may be estimated from a position of a Wi-Fi base station to which a communication device described below is connected.

The mode switching switch 22 is a switch operated by an occupant. The mode switching switch 22 may be a mechanical switch or a graphical user interface (GUI) switch set on a touch panel. The mode switching switch 22 is a switch for instructing switching of a driving mode. Driving modes which can be executed by the moving body 1 include at least a mode A in which acceleration and deceleration are automatically controlled and steering is controlled on the basis of a simple operation of a first operator OP1 described below. In addition, the driving modes may include a mode B in which acceleration and deceleration are automatically controlled and steering is controlled on the basis of an operation of a second operator OP2. The driving modes may also include driving modes in which acceleration and deceleration in each of the modes A and B are changed to be controlled on the basis of a manual operation. In the following description, the modes A and B will be mainly described.

The HMI 30 is provided in an interior of the moving body (typically refers to a closed space that stores an occupant, but refers to a space surrounding the seat if the moving body 1 is in a form of an open car). The HMI 30 includes, for example, a display device, a speaker, a touch panel, and the like.

The drive device 40 is a device for moving the moving body 1 on a road. The drive device 40 includes, for example, a wheel group including steering wheels and driving wheels, a motor that drives the driving wheels, a battery that stores power to be supplied to the motor, and a steering device that adjusts a steering angle of the steering wheels. The drive device 40 may include an internal combustion engine or a fuel cell as a driving force output means or a power generation means. In addition, the drive device 40 may further include a brake device that utilizes frictional force or air resistance.

The direction indicator 50 is provided on an outer plate of the moving body 1, and notifies an outside of the moving body 1 of a lane change of the moving body 1 by a flickering operation of a lamp.

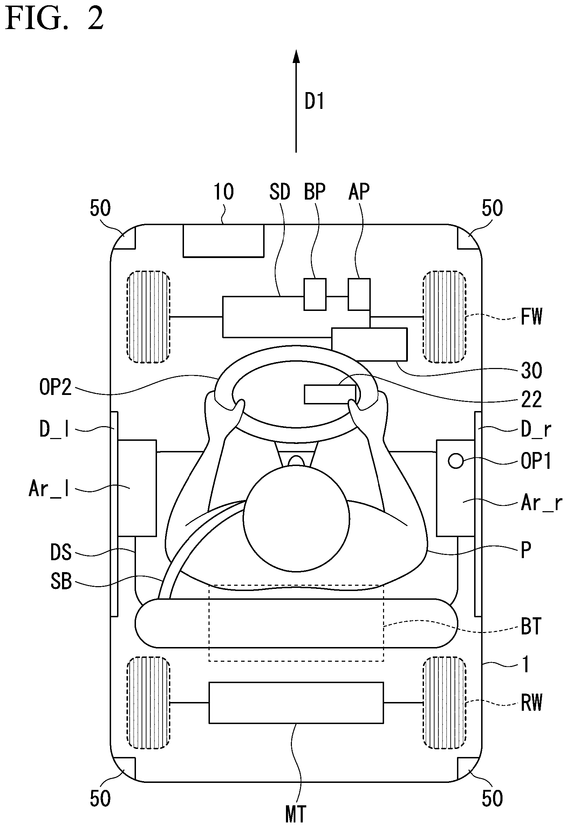

FIG. 2 is a perspective view of the moving body 1 according to the first embodiment, seen from above. In FIG. 2, FW is the steering wheel, RW is the driving wheel, SD is the steering device, MT is the motor, and BT is the battery. The steering device SD, the motor MT, and the battery BT are included in the drive device 40. AP is the accelerator pedal, and BP is the brake pedal, which are included in the operator group 14, respectively. When acceleration and deceleration are always automatically controlled, at least the accelerator pedal AP may be omitted. The moving body 1 shown in FIG. 2 is a one-seater moving body, and an occupant P is seated in a driver's seat DS and wearing seatbelts SB. An arrow D1 is the moving direction (speed vector) of the moving body 1. The external environment detection device 10 is provided near a front end of the moving body 1, and the mode switching switch 22 is provided in a boss portion of the steering wheel WH. In addition, the direction indicator 50 is provided on the four corners of the moving body 1.

### [First operator]

The moving body 1 is equipped with, for example, a left door D_1 and a right door D_r, so that occupants can get on and off from either the left or right side. A left armrest Ar_1 is provided on an inside of the left door D_l, and a right armrest Ar_r is provided on an inside of the right door D_r. Among these, the right armrest Ar_r is equipped with a first operator OP1. This arrangement is an arrangement for a case where a destination of the moving body 1 is a country or region where vehicles drive on the left. When the destination of the moving body 1 is a country or region where vehicles drive on the right, the first operator OP1 is provided on the left armrest Ar_l. This arrangement is based on an assumption that when passengers get on and off the moving body 1 in a country or region where vehicles drive on the left, they often get on and off from a sidewalk side, that is, the left, of the moving body 1 stopped at a left edge of a roadway. When the first operator OP1 is provided at a door on a side where the occupant P gets on and off, there is a possibility that the first operator OP1 may get caught on the body or clothing when the occupant gets on and off. Therefore, the first operator OP1 is provided at the right armrest Ar_r provided at the right door D_r, which is rarely used for getting on and off. In a case where vehicles drive on the right, the opposite will be applied. In other words, the armrest equipped with the first operator OP1 is provided on an inside of a door opposite to a side on which the moving body 1 is legally determined to pass, among two doors provided on left and right sides of the moving body 1.

The first operator OP1, for example, receives a discrete operation (an operation in which only two states of an on operation or an off operation are present for a certain instruction). The first operator OP1 has a form of a joystick, a cross key, or the like. In the present invention, the first operator OP1 only needs to be operable at least in left and right directions. In a case where the first operator OP1 is a joystick, when it is operated to the left or right side by a predetermined amount or more, an operation amount detection sensor attached to the first operator OP1 outputs a signal indicating that it has been operated in either the left or right direction to the control device 100.

A second operator OP2 may be provided in front of the occupant P in the moving body 1. The second operator OP2 has a form of a so-called steering wheel (not limited to a wheel-shaped steering wheel, but may also be a non-standard steering wheel) and is used to manually operate the moving direction (steering angle) of the moving body 1. The second operator OP2 receives, for example, continuous operations. A rotation angle sensor and/or a torque sensor are attached to the second operator OP2 as operation amount detection sensors, and these sensors detect an amount of operation (or operating force) performed by the occupant P and output it to the control device 100.

The first operator OP1 is provided further backward than the second operator OP2 in the moving direction D1 of the moving body 1. This is because the travel control of the moving body 1 based on an operation of the first operator OP1 is performed in a state closer to automated driving (a high degree of driving assistance), so it is assumed that the occupant P will be in a relaxed position. On the other hand, when the second operator OP2 is operated, at least the steering is performed manually, so it is assumed that the occupant P is in a more forward-leaning position than described above. By adopting such an arrangement, it is possible to appropriately receive driving operations according to a state of the occupant P.

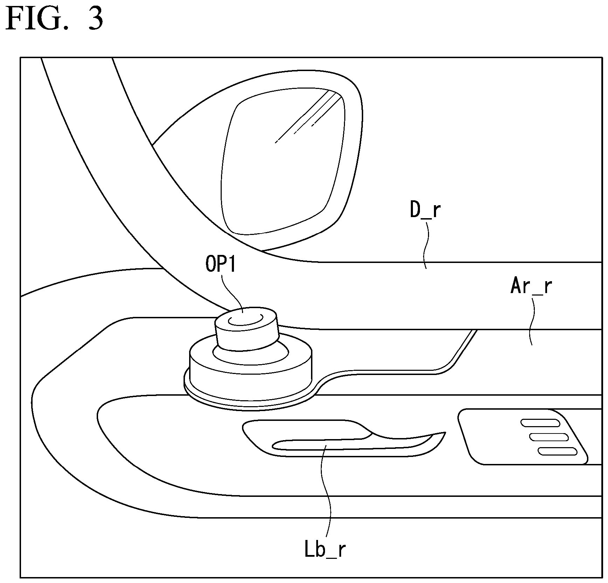

In addition, the left door D_l and the right door D_r are each equipped with an opening or closing operator for opening and closing operations. FIG. 3 is a view seen from the inside of the moving body 1 with the right door D_r open. In FIG. 3, Lb_r is a right side opening or closing operator. The first operator OP1 is provided at a position that does not overlap the right side opening or closing operator Lb_r in a side view. As a result, it can be difficult for the occupant P to unconsciously and erroneously operate the right side opening or closing operator Lb_r. In addition, when the occupant P operates the right side opening or closing operator Lb_r, it can be difficult for the occupant P to unconsciously and erroneously operate the first operator OP1.

Returning to FIG. 1, the storage device 70 is, for example, a non-transient storage device such as a hard disk drive (HDD), a flash memory, or a random access memory (RAM). The storage device 70 stores map information 72, a program 74 executed by the control device 100, and the like. In FIG. 1, the storage device 70 is depicted outside a frame of the control device 100, but the storage device 70 may be included in the control device 100. Moreover, the storage device 70 may be provided on a server (not shown). The map information 72 does not necessarily have to be present.

### [Control device]

The control device 100 includes, for example, a recognition unit 120, a target trajectory generation unit 130, a drive control unit 140, and an HMI control unit 150. These components are realized by, for example, a hardware processor such as a central processing unit (CPU) executing a program (software) 74. Some or all of these components may be realized by hardware (a circuit unit; including circuitry) such as large scale integration (LSI), an application specific integrated circuit (ASIC), a fieldprogrammable gate array (FPGA), or a graphics processing unit (GPU), or may be realized by software and hardware in cooperation. A program may be stored in advance in the storage device 70, or may be stored in a detachable storage medium (a nontransitory storage medium) such as a DVD or a CD-ROM and installed in the storage device 70 by the storage medium being mounted on a drive device.

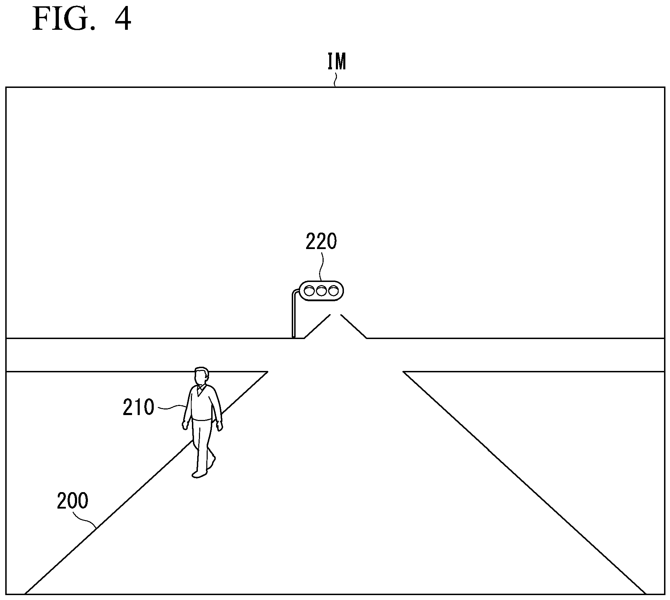

The recognition unit 120 recognizes types and positions of objects at least on the moving direction side of the moving body 1 on the basis of information input from the external environment detection device 10. FIG. 4 is a diagram which shows an example of an image IM captured by an external camera of the external environment detection device 10. The recognition unit 120 recognizes a traveling path boundary 200, a pedestrian 210, a state of a traffic light 220, other vehicles (not shown), and the like. The traveling path boundary 200 is a road division line, a road shoulder, a step, a guardrail, or the like, and is an outer edge of an area in which the moving body 1 can travel. The recognition unit 120 recognizes the positions and types of these objects on the image IM by inputting the image IM into a learned model for recognizing the type of an object.

The target trajectory generation unit 130 projects, for example, an object recognized on the image IM onto a virtual plane viewed from above, and generates a target trajectory along which the moving body 1 needs to travel on the virtual plane. For example, the target trajectory generation unit 130 generates a target trajectory so that the moving body 1 travels, in principle, through a center in a width direction of the traveling path boundary, and avoids contact when a pedestrian or another vehicle is present. At this time, the target trajectory generation unit 130 sets a distribution of risk values, which are index values for avoiding contact, around the traveling path boundary and objects, and generates a target trajectory so that the moving body 1 passes through points with small risk values. The target trajectory may be generated so that it is accompanied by a speed element, or the target trajectory may be generated so that the moving body 1 automatically stops when a traffic light indicates that passage is not permitted. Note that such acceleration and deceleration control may be performed by the drive control unit 140.

The drive control unit 140 controls the drive device 40 so that the moving body 1 travels along the target trajectory. Contents of control by the drive control unit 140 are publicly known, so a detailed description will be omitted.

The HMI control unit 150 controls the HMI 30 so that it notifies the occupant P of a state of the moving body 1, and the like.

### [Control based on operation of first operator]

When the first operator OP1 is not being operated, the target trajectory generation unit 130 generates a target trajectory so that the moving body 1 moves to maintain a current traveling path (so-called "follow the road") on the basis of a guideline described above. When the first operator OP1 is operated in either the left or right direction, the target trajectory generation unit 130 generates a target trajectory so that the moving body 1 automatically turns to the left or right (turning right or left). Hereinafter, it is assumed that the first operator OP1 is operated to the right side. On the basis of the image IM captured by the external camera of the external environment detection device 10, the target trajectory generation unit 130 searches for a traveling path that intersects with a traveling path on which the moving body 1 is currently traveling and is closest to the moving body 1 among traveling paths on which the moving body can turn right at a time when the first operator OP1 is operated to the right side. When the target trajectory generation unit 130 searches for a traveling path on which the moving body 1 can turn right, it generates a target trajectory so that the moving body 1 turns right on the traveling path. The searched traveling path is an example of "traveling path candidates." Note that instead of the target trajectory generation unit 130, the external environment detection device 10 itself may search for traveling path candidates on the basis of the image IM, and the target trajectory generation unit 130 may generate a target trajectory on the basis of the traveling path candidates received from the external environment detection device 10.

Note that when the moving direction of the moving body 1 is determined according to an operation on the second operator OP2, so-called manual steering is performed, and therefore the target trajectory generation unit 130 stops operating (acceleration and deceleration control may be performed automatically). When the second operator OP2 is operated while the mode A is executed, the target trajectory generation unit 130 may stop operating and transition to a mode B, in which steering is performed manually with an assumption that the occupant P has indicated an intention to drive manually.

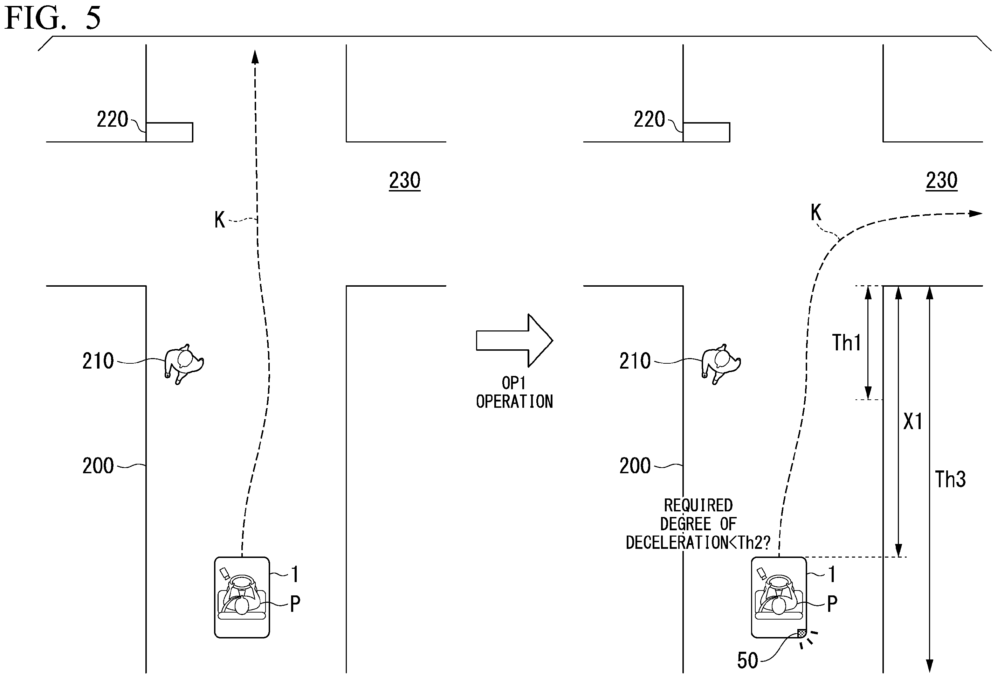

FIG. 5 is a diagram which exemplifies the target trajectory K before and after the first operator OP1 is operated. As shown in FIG. 5, the target trajectory generation unit 130 generates the target trajectory K for the moving body 1 to enter a traveling path 230, which is a destination of turning right, in response to the first operator OP1 being operated to the right side. The drive control unit 140 controls the drive device 40 so that the moving body 1 travels along the generated target trajectory K, and more specifically, controls the drive device 40 to decelerate the moving body 1 so that it can enter the traveling path 230, which is the destination of the turning right, and causes the right direction indicator 50 to flicker.

### [Control when turning right or left]

Here, it may not be suitable for the occupant of the moving body 1 and surrounding vehicles to always decelerate the moving body 1 and perform control to cause the direction indicator 50 to flicker along the target trajectory K for turning right or left, generated by the target trajectory generation unit 130. For this reason, the drive control unit 140 executes the processing to be described below for the generated target trajectory K for turning right or left. Note that the processing described below may be executed at least after the first operator OP1 is operated in either the left or right direction, and may not be limited to be executed at a timing when the target trajectory K is generated (for example, the processing to be described below may be executed after the first operator OP1 is operated in either the left or right direction and before the target trajectory K is generated).

First, the drive control unit 140 determines whether a distance X1 between the moving body 1 and the traveling path 230 in a longitudinal direction of the traveling path on which the moving body 1 is present is equal to or less than a first threshold value Th1. The first threshold value Th1 is set, for example, to a lower limit of a distance that allows the moving body 1 to turn right or left with margin. When the distance X1 is equal to or less than the first threshold value Th1, this means that the moving body 1 has a low margin of a distance to turn right and enter the traveling path 230. For this reason, the drive control unit 140 determines not to allow the moving body 1 to travel along the target trajectory K (that is, to continue traveling straight), and does not execute either the deceleration control of the moving body 1 or the flickering control of the direction indicator 50.

Furthermore, the drive control unit 140 refers to a speed of the moving body 1 and a target speed obtained from the target trajectory K to calculate a degree of deceleration required for traveling along the target trajectory K (that is, a degree of deceleration required for entering the traveling path 230 to which the moving body turns right), and determines whether the calculated required degree of deceleration is equal to or greater than the second threshold value Th2. For example, the drive control unit 140 determines the target speed at a portion of the target trajectory K where the curvature is maximized, and calculates the required degree of deceleration by dividing a difference between the speed of the moving body 1 and the target speed by a distance. The second threshold value Th2 is set to, for example, an upper limit of the degree of deceleration of the moving body 1 that does not cause discomfort to the occupant P. When the required degree of deceleration is equal to or greater than the second threshold value Th2, this means that the moving body 1 has a low margin of speed for the moving body 1 to turn right and enter the traveling path 230. For this reason, the drive control unit 140 determines not to allow the moving body 1 to travel along the target trajectory K, and does not execute either the deceleration control of the moving body 1 or the flickering control of the direction indicator 50.

Furthermore, the drive control unit 140 determines whether the distance X1 described above is equal to or greater than a third threshold value Th3. The third threshold value Th3 is set, for example, to an upper limit of the distance at which it is considered natural to cause the direction indicator 50 to flicker according to common traffic sense. When the distance X1 is equal to or greater than the third threshold value Th3, this means that it is premature for the moving body 1 to cause the direction indicator 50 to flicker to enter the traveling path 230. For this reason, the drive control unit 140 delays the flickering of the direction indicator 50 until the distance X1 becomes less than the third threshold value Th3, and causes the right direction indicator 50 to flicker at a timing when the distance X1 becomes less than the third threshold value Th3. In this case, the deceleration control of the moving body 1 may be executed simultaneously with the flickering control of the direction indicator 50, or may be executed at a timing earlier than the flickering control of the direction indicator 50 (that is, at a timing when the distance X1 is equal to or greater than the third threshold value Th3).

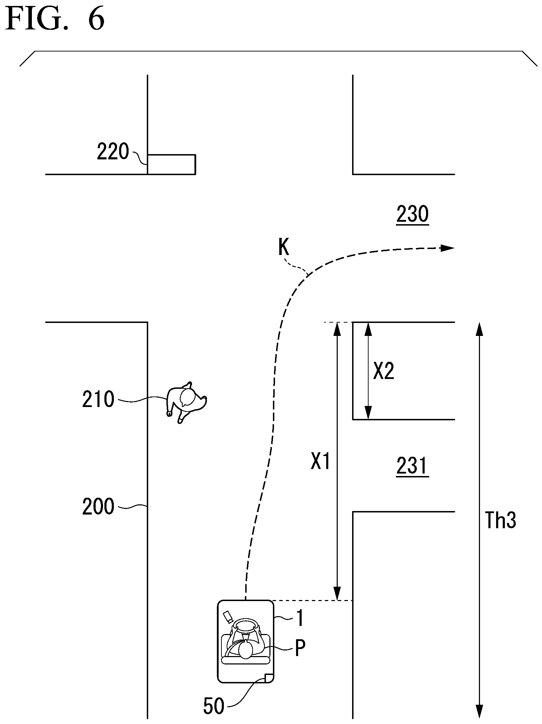

Furthermore, in addition to the third threshold value Th3, the drive control unit 140 also delays the flickering control of the direction indicator 50 when there is another traveling path between the traveling path that is a target for turning right or left and a current position of the moving body 1. FIG. 6 is a diagram which shows an example of a situation in which the flickering control of the direction indicator 50 is delayed. FIG. 6 shows a case in which, in addition to the traveling path shown in FIG. 5, there is another traveling path 231 between the moving body 1 and the traveling path 230.

As shown in FIG. 6, when another traveling path 231 is present between the traveling path 230 that is a target for turning right or left and the current position of the moving body 1, the drive control unit 140 delays the flickering of the direction indicator 50 until the moving body 1 passes through the other traveling path 231 (in other words, in FIG. 6, the distance X1 between the moving body 1 and the traveling path 230 becomes equal to or less than a distance X2). Note that at this time, the deceleration control of the moving body 1 may be executed simultaneously with the flickering control of the direction indicator 50, or may be executed at a timing earlier than the flickering control of the direction indicator 50 (that is, the timing when the distance X1 is equal to or greater than the distance X2).

Note that, regarding the control of FIG. 6, the traveling path 230 is selected as the target for turning right, not the traveling path 231 that is closer to the moving body 1. For example, when a distance between the moving body 1 and the traveling path 231 is equal to or less than the first threshold value Th1 described above, the traveling path 230 is selected as the target for turning right instead of the traveling path 231. In addition, for example, the control device 100 records a traveling history of the moving body 1, and when the moving body 1 has a significantly greater history of turning right on the traveling path 230 than on the traveling path 231, the traveling path 230 may be selected as the target for turning right or left instead of the traveling path 231. In addition, for example, the moving body 1 may further be equipped with an in-vehicle camera, and the traveling path 230 may be selected as the target for turning right instead of the traveling path 231 on the basis of a line-of-sight direction of the occupant P at a timing when the first operator OP1 is operated. Moreover, for example, when it is determined that it is not allowed to pass along the traveling path 231 (for example, a one-way street) on the basis of the image IM captured by an external camera, the traveling path 230 may be selected as the target for turning right instead of the traveling path 231.

### [Response to intervention by occupant]

When the moving body 1 is traveling along the target trajectory K and changes its moving direction, it is considered that the occupant P may try to intervene in the traveling of the moving body 1 by depressing a brake pedal BP according to various circumstances (for example, when the occupant P feels that the moving direction is different from his or her intention). It is not desirable to frequently change the target trajectory K of the moving body 1 in response to such intervention by the occupant P, especially when the moving body travels on a roadway. For this reason, even if the moving body 1 stops due to the intervention of the occupant P, the target trajectory generation unit 130 holds a received instruction to change the moving direction and operates not to change the target trajectory K. At this time, when the moving body 1 stops due to the intervention of the occupant P when the moving body 1 changes its moving direction, the control device 100 may notify the HMI 30 of an operation method for canceling the change of the moving direction.

### [Traveling path identification when turning right or left]

When the moving body 1 is turning right or left along the target trajectory K while causing the direction indicator 50 to flicker, the control device 100 may fail to identify a traveling path after turning right or left on the basis of image information. In this case, measures such as stopping the traveling of the moving body 1 are considered, but especially in a situation where the moving body 1 is turning right or left while causing the direction indicator 50 to flicker, for example, it is expected that other vehicles are traveling with an assumption that the moving body 1 will turn right or left, so that it is not desirable to stop the moving body 1 on the spot. For this reason, when the target trajectory generation unit 130 fails to identify the traveling path after turning right or left on the basis of the image information at a time when the moving body 1 is turning right or left along the target trajectory K while causing the direction indicator 50 to flicker, it identifies the traveling path after turning right or left using a method to be described below.

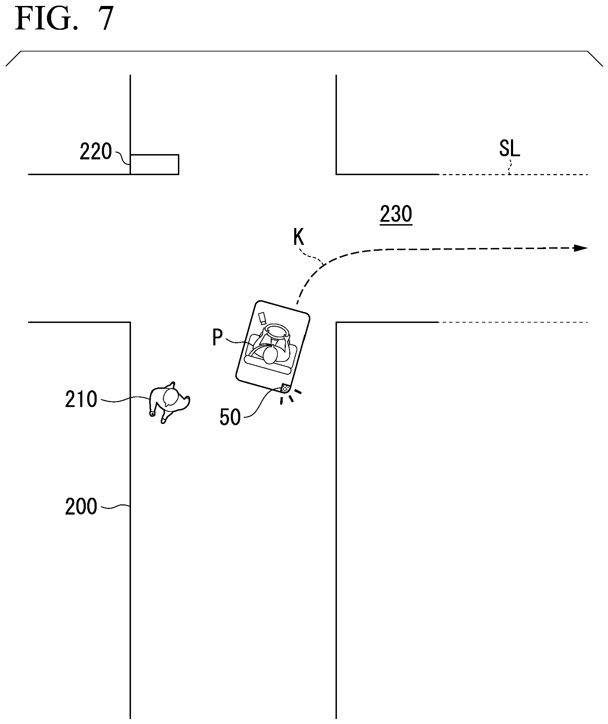

FIG. 7 is a diagram for describing the identification of the traveling path after turning right or left by the target trajectory generation unit 130. FIG. 7 shows a situation in which the moving body 1 fails to identify the traveling path after turning right and leaves a traveling path SL while turning right onto the traveling path 230 with the direction indicator 50 flickering. When the target trajectory generation unit 130 fails to identify the traveling path after turning right, it complements the traveling path SL after turning right on the basis of past traveling path information, recorded by the control device 100. Here, the past traveling path information is, for example, the image IM captured by an external camera (or road boundary information extracted from the image IM) when the moving body 1 has traveled on the same traveling path in the past, and the corresponding GPS coordinates are linked and recorded. When the target trajectory generation unit 130 fails to identify the traveling path after turning right, it can acquire the traveling path information linked with GPS coordinates closest to a current position and complement it as the traveling path SL after turning right. When there is no past traveling path information close to the current position of the moving body 1, the target trajectory generation unit 130 may refer to map information mounted in the moving body 1 and store the traveling path SL using the traveling path information corresponding to the current position.

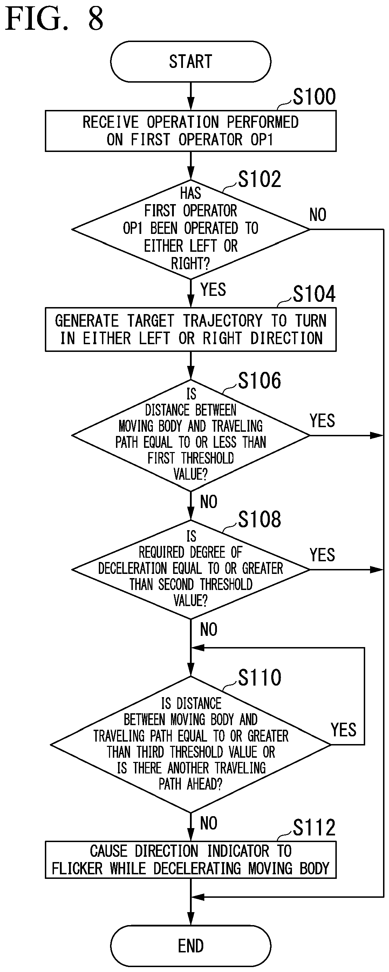

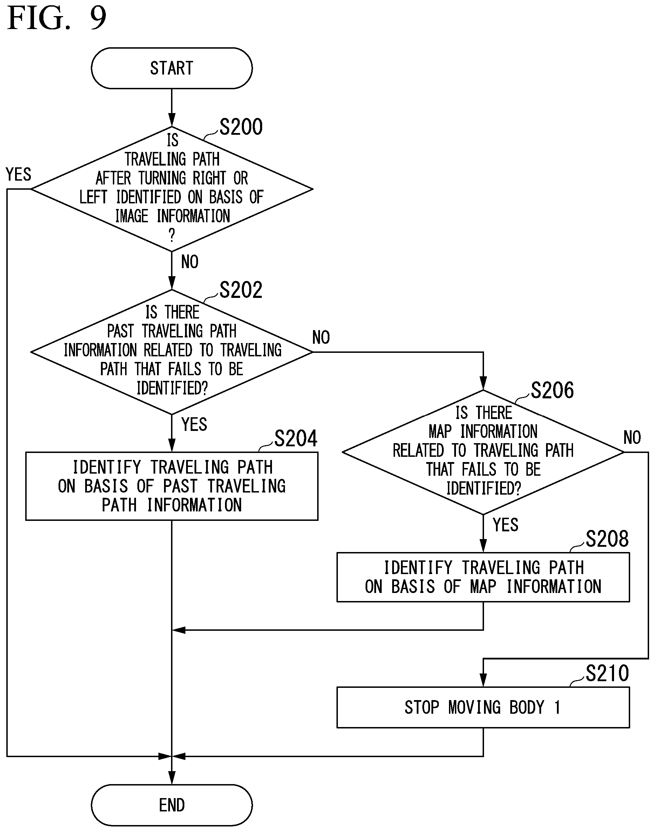

Next, a flow of processing executed by the control device 100 will be described with reference to FIG. 8 and FIG. 9. FIG. 8 is a diagram which shows an example of the flow of the processing executed by the control device 100. The processing shown in FIG. 8 is executed repeatedly while the moving body 1 is traveling.

First, the control device 100 receives an operation performed on the first operator OP1 (step S100). Next, the control device 100 determines whether the first operator OP1 has been operated in either the left or right direction (step S102). When it is determined that the first operator OP1 has not been operated in either the left or right direction, the control device 100 ends processing of this flowchart.

On the other hand, when it is determined that the first operator OP1 has been operated in either the left or right direction, the control device 100 generates a target trajectory to turn in either the left or right direction in which the first operator has been operated (step S104). Next, the control device 100 determines whether a distance between the moving body 1 and a traveling path that is turned right or left on the target trajectory is equal to or less than a first threshold value (step S106). When it is determined that the distance between the moving body 1 and the traveling path that is turned right or left on the target trajectory is equal to or less than the first threshold value, the control device 100 ends the processing of this flowchart.

On the other hand, when it is determined that the distance between the moving body 1 and the traveling path that is turned right or left on the target trajectory is greater than the first threshold value, the control device 100 next determines whether a degree of the deceleration required to enter the traveling path that is turned right or left is equal to or greater than a second threshold value (step S108). When it is determined that the degree of deceleration required to enter the traveling path that is turned right or left is equal to or greater than the second threshold value, the control device 100 ends the processing of this flowchart.

On the other hand, when it is determined that the degree of deceleration required to enter the traveling path that is turned right or left is less than the second threshold value, the control device 100 next determines whether the distance between the moving body 1 and the traveling path that is turned right or left on the target trajectory is equal to or greater than a third threshold value, or whether another traveling path is present between the moving body 1 and the traveling path (step S110). When it is determined that the distance between the moving body 1 and the traveling path that is turned right or left on the target trajectory is equal to or greater than the third threshold value, or that another traveling path is present between the moving body 1 and the traveling path, the control device 100 waits for a certain period of time and then executes the processing of S110 again.

On the other hand, when it is not determined that the distance between the moving body 1 and the traveling path that is turned right or left on the target trajectory is equal to or greater than the third threshold value, or that another traveling path is present between the moving body 1 and the traveling path, the control device 100 controls the drive device 40 to decelerate the moving body 1 and cause the direction indicator 50 to flicker (step S112). As a result, the processing of this flowchart ends.

FIG. 9 is a diagram which shows an example of a flow of processing executed by the control device 100. The processing shown in FIG. 9 is executed when the moving body 1 turns right or left along the target trajectory while causing the direction indicator 50 to flicker.

First, the control device 100 determines whether the traveling path after turning right or left has been identified on the basis of the image information (step S200). If it is determined that the traveling path after turning right or left has been identified on the basis of the image information, the control device 100 ends the processing of this flowchart.

On the other hand, when it is determined that the traveling path after turning right or left has not been identified on the basis of the image information, the control device 100 determines whether past traveling path information on the traveling path for which identification has failed is present (step S202). When it is determined that past traveling path information on the traveling path for which identification has failed is present, the control device 100 identifies the traveling path on the basis of the past traveling path information and ends the processing of this flowchart (step S204). On the other hand, when it is determined that the past traveling path information on the traveling path for which identification has failed is not present, the control device 100 determines whether map information on the traveling path for which identification has failed is present (step S206).

When it is determined that map information on the traveling path for which identification has failed is present, the control device 100 identifies the traveling path on the basis of the map information (step S208). On the other hand, when it is determined that map information on the traveling path for which identification has failed is not present, the control device 100 stops the moving body 1 (step S210). As a result, the processing of this flowchart ends.

According to the first embodiment described above, in response to an operation performed on the first operator OP to indicate either a left or right direction, the moving body 1 is decelerated and the direction indicator is caused to flicker while taking into account a situation on the traveling path of the moving body 1. As a result, it is possible to suitably control the traveling of the moving body when the moving direction of the moving body is changed.

### <Second embodiment>

A second embodiment will be described below. In the first embodiment, a configuration with one seat has been described, but the moving body of the second embodiment has two seats lined up in a direction intersecting the moving direction of the moving body, and the armrest with the first operator OP1 provided thereon is provided between the two seats.

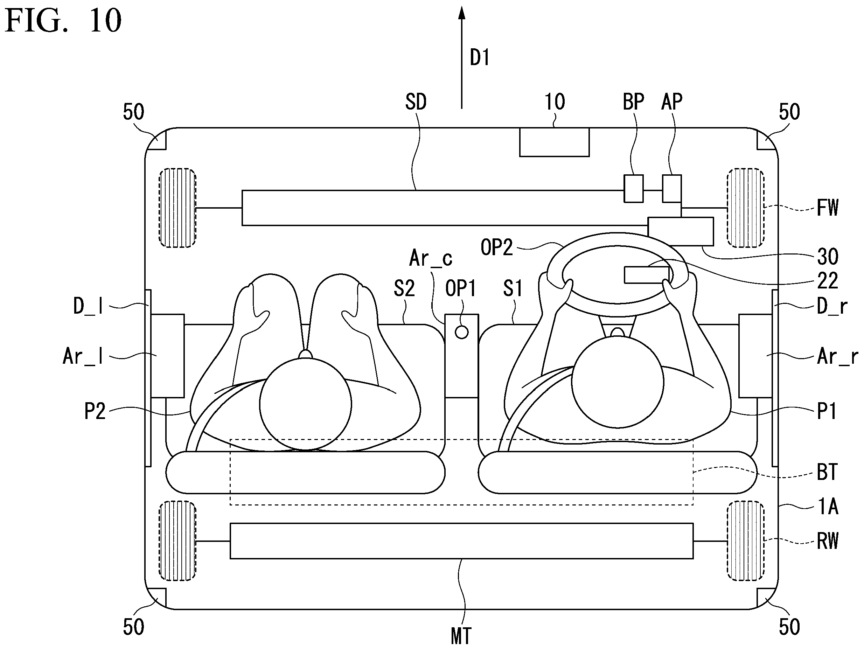

FIG. 10 is a perspective view of a moving body 1A of the second embodiment, seen from above. In FIG. 10, some of the symbols shown in FIG. 2 that are not essential are omitted. The moving body 1A has two seats S1 and S2, and a center armrest Ar_c between them. The first operator OP1 is provided in the center armrest Ar_c. In FIG. 10, the center armrest Ar_c is shown as an integrated portion shared by occupants P1 and P2, but the center armrest Ar_c may be separated into a portion for the occupant P1 and a portion for the occupant P2, and in this case, the first operator OP1 is provided in the portion of the center armrest Ar_c for the occupant P1.

According to the second embodiment described above, it is possible to achieve the same effects as the first embodiment. In addition, since the first operator OP1 is provided at a position that does not interfere with the occupant getting on and off, it is possible to avoid impeding the occupant getting on and off, which is similar to the first embodiment.

Although a mode for carrying out the present invention has been described above using the embodiment, the present invention is not limited to the embodiment, and various modifications and substitutions can be made within a range not departing from the gist of the present invention.

### REFERENCE SIGNS LIST

10 External environment detection device
40 Drive device
100 Control device
120 Recognition unit
130 Target trajectory generation unit
140 Drive control unit
OP1 First operator
OP2 Second operator
Ar_1 Left armrest
Ar_r Right armrest
Ar_c Center armrest
D_l Left door
D_r Right door

## Claims

1. A moving body capable of carrying an occupant, comprising:
a drive device for moving the moving body;
a detection device for detecting a situation on at least a moving direction side of the moving body;
an operator that is provided on an armrest of the moving body and is operable at least left and right, and that allows the occupant to instruct the moving direction of the moving body; and
a control device configured to cause the moving body to travel in a mode in which acceleration or deceleration and steering are automatically performed on the moving body, to automatically generate a target trajectory for the moving body to change the moving direction on the basis of the detected situation on the moving direction side in response to an operation performed on the operator to instruct the moving direction, and to control the drive device so that the moving body moves along the target trajectory.

2. The moving body according to claim 1,
wherein, when an operation direction of the operator is a first direction, either left or right, the control device generates the target trajectory with the first direction as the moving direction to which a change is to be made, and
when the operator is operated in a direction different from the first direction after the first direction has been determined as the moving direction to which a change is to be made, the control device cancels the change of the moving direction.

3. The moving body according to claim 2,
wherein, when the operator has been operated in the first direction, either the left or right direction, for a first period or more, the control device generates the target trajectory with the first direction in which the operator has been operated as the moving direction to which a change is to be made,
the control device cancels the change of the moving direction when the operator has been operated in a direction different from the first direction for a second period or more after the first direction in which the operator has been operated is determined as the moving direction to which the change is to be made, and
the second period is longer than the first period.

4. The moving body according to claim 2,
wherein the operator is at least operable further in a backward direction,
the control device generates the target trajectory with the first direction as the moving direction to which a change is to be made when the operator has been operated in the first direction for the first period or more,
the control device cancels the change of the moving direction when the operator has been operated in a backward direction for a third predetermined period or more after the first direction in which the operator has been operated is determined as the moving direction to which a change is to be made, or when the operator has been operated in a direction other than the first direction and the backward direction for a second period or more, and
the third period is a period shorter than the second period.

5. The moving body according to claim 1,
wherein the moving body is equipped with a notification device for performing notification on the occupant, and
the control device, when receiving an operation for the operator, outputs a notification indicating that the operation has been received to the notification device.

6. The moving body according to claim 1,
wherein the control device holds an instruction to change the moving direction even if the moving body stops or a speed of the moving body drops equal to or lower than a predetermined value due to an intervention of the occupant while the moving body is moving along the target trajectory.

7. The moving body according to claim 1,
wherein the moving body is equipped with a notification device for performing notification on the occupant, and
the control device causes the notification device to notify the occupant to perform an operation to cancel the instruction to change the moving direction when the moving body stops due to the intervention of the occupant while the moving body is moving along the target trajectory.

8. The moving body according to claim 1,
wherein, when the detection device detects a plurality of lane change destination candidates in the moving direction of the moving body, the control device determines one of the plurality of lane change destination candidates as the moving direction to which a change is to be made by receiving a plurality of operations from the operator.

9. The moving body according to claim 1,
wherein, when the detection device detects a plurality of lane change destination candidates in the moving direction of the moving body, the control device determines one of the plurality of lane change destination candidates as the moving direction to which a change is to be made by detecting one or more of a traveling history, a speech, a line of sight, and a gesture of the occupant.

10. The moving body according to claim, 8,
wherein the moving body is equipped with a display device that displays information on traveling of the moving body, and
the control device causes the display device to display one of the lane change destination candidates, which has been determined as the moving direction to which a change is to be made.

11. A control method executed by a control device of a moving body capable of carrying an occupant and includes a drive device for moving the moving body, a detection device for detecting a situation on at least a moving direction side of the moving body, an operator that is provided on an armrest of the moving body, is operable at least in either left or right direction, and allows the occupant to instruct the moving direction of the moving body, and a control device for causing the moving body to travel in a mode in which acceleration or deceleration and steering are automatically performed, the method comprising:
automatically generating a target trajectory for the moving body to change the moving direction on the basis of the detected situation on a moving direction side in response to an operation performed on the operator to instruct the moving direction, and
controlling the drive device so that the moving body moves along the target trajectory.

12. A program executed by a control device of a moving body capable of carrying an occupant and includes a drive device for moving the moving body, a detection device for detecting a situation on at least a moving direction side of the moving body, an operator that is provided on an armrest of the moving body, is operable in either left or right direction, and allows the occupant to instruct the moving direction of the moving body, and a control device for causing the moving body to travel in a mode in which acceleration or deceleration and steering are automatically performed,
wherein the program automatically generates a target trajectory for the moving body to change the moving direction on the basis of the detected situation on the moving direction side in response to an operation performed on the operator to instruct the moving direction, and controls the drive device so that the moving body moves along the target trajectory.
